# EUROPEAN PATENT APPLICATION

(11) **EP 1 762 286 A1**
(43) Date of publication of application: **14.03.2007**
(21) Application number: 05720500.7
(22) Date of filing: 10.03.2005
(51) Int. Cl.: A63F 13/00, G06T 13/00

(54) **ELECTRONIC GAME MACHINE, DATA PROCESSING METHOD IN ELECTRONIC GAME MACHINE, PROGRAM AND STORAGE MEDIUM FOR THE SAME**

(30) Priority: 10.05.2004 JP 2004140330
(71) Applicant: SEGA CORPORATION, Tokyo 144-8531 (JP)
(72) Inventor: Shimizu, Toru, Sega Corporation, Tokyo 1448531 (JP); Hirabayashi, Takao, Sega Corporation, Tokyo 1448531 (JP)
(74) Representative: Brown, Kenneth Richard
(86) International application number: PCT/JP2005/004229
(87) International publication number: WO 2005/107903

(57) **Abstract**

An aspect of the present invention includes 1) a process of detecting an event input that is inputted by an operation signal and determining sound characteristic information and sound effects corresponding to the event input, 2) a process of obtaining a first sound source position coordinates information in which a location where an event occurred in a virtual space is taken as a sound source position, 3) a process of determining a propagation mode of a sound to be produced corresponding to the event input in the virtual space based on sound characteristics information and the first sound source position coordinates information, 4) a process of determining a second sound source position coordinates information indicating a position of a sound source on the radar image based on the first sound source position coordinates information, and 5) a process of displaying a sound wave image indicating a propagation mode of the sound effect on the radar image based on the propagation mode of the sound and the second sound source position coordinates information.

## Description

### TECHNICAL FIELD

The present invention relates to electronic game devices, data processing methods in electronic game devices, and programs for executing such methods on a computer, and particularly relates to electronic game devices in which the game application program uses a process of determining whether or not the propagation of sound is easily discoverable by the enemy side and the result thereof is displayed on display means separate from a main screen.

### BACKGROUND

Game programs are known in which a radar function is applied to discover enemy characters, which are opponents within the game application program. For example, JP H10-263205-A discloses a game device in which video of a soccer game is shown when seen from a viewpoint defined within a virtual space at the center of the screen and a small-sized radar screen is displayed separate from this background screen. Movement is performed such that the viewpoint moves from a rear side of a player character who advances aiming for a ball, and the central image from this viewpoint is displayed largely on the whole screen. At this time, it is quite difficult for a game-player to know where teammate and opponent players are present and with what positional relationship around the player character being operated by the game-player.

Accordingly, a radar image is configured centered on the player character that indicates where teammate and opponent players are present and with what positional relationship, and this is displayed on the monitor separate from the main screen.

In military related games, target acquisition techniques using sound are applied in the radar display method. In a case of active sonar, reflected waves of a sound discharged from a warship and propagated through water are received at a receiver of the warship to detect other ships and specify the positions thereof. Since the conditions of sound propagation varying depending to some extent on water flow and temperature, correction is applied to the received data. The sound propagation conditions are displayed on the display screen of a control device as a radar screen. It should be noted that with passive sonar, rather than actively transmitting sound waves from the warship, sounds produced from other ships are received by a sound detector and the positions of the other ships are specified.
[Patent Document 1] Japanese Unexamined Patent Application Publication H 10-263205

There are conventional games in which enemy characters arranged within at least a predetermined area in a game space react to a sound effect that is produced corresponding to an event caused by player input and the enemy characters, who had been on standby up until that point, begin to attack the player character (*"Bonanza Bros.,"* a commercial game by Sega Corporation in 1990), and since the movements of the enemies therein were changed corresponding to the occurrence of an event itself, it was not actually determined whether or not the sound that had been produced by the actual event had in fact reached the enemy character (whether or not it was heard by the enemy), such that there was a sense of unnaturalness at times such as when an event occurred and all the enemies within the predetermined range reacted regardless of their distances from the source of the sound.

### SUMMARY

### Problems to be Solved by the Invention

Accordingly, it is an object of the present invention to provide a game application program in which an indicator is appropriately given to a player of the extent to which opponents perceive a sound produced from an object operated by the game-player, thereby enabling the game-player to appropriately operate objects to be operated, as well as providing a data processing method for electronic amusement devices for executing this and an electronic amusement device.

### Means for Solving the Problems

In order to achieve this object, the present invention involves image processing technologies applied to an electronic amusement device comprising a memory in which a game program is stored, an operation terminal that is operated by a game-player, and a data processing device that executes data processing for electronic amusement based on operation data from the operation terminal and the game program, and executes a process in which a processing result is outputted to display means.

That is, the present invention creates a sound radar image representing propagation of sound based on the program and operation data, and executes sound radar image processing means that displays the image on the display means,
wherein the sound radar image processing comprises; sound source coordinates position setting that set coordinates positions of a sound source in a virtual three dimensional space defined by the game program; sound characteristics setting that set a parameter relating to a characteristic of a sound produced from a sound source; sound propagation mode setting that set a propagation mode of a sound in the virtual space based on the sound source coordinates position and sound characteristics parameters; sound propagation mode display processing for displaying the sound propagation mode on the display means separate from a main screen; target body symbol display processing that obtains a position with respect to the sound source position of a target body defined as an opponent in the game program for the game-player and based on this positional relationship displays the target body symbol on the sound propagation mode display image; and overlap determination processing that determines an overlap between a position of the target body in the virtual space and the sound propagation range.

Moreover, the present invention involves a data processing method in a game, wherein by a CPU executing a game program and through control of an action and a position of a player character in a virtual space based on an event input that is inputted based on operation signal from operation means operated by a game-player, the game is advanced, and an image of the game is displayed on display means, and a radar image, which indicates a relative positional relationship between the player character and objects arranged in a predetermined range thereabout in the virtual space, is displayed on the display means, the data processing method comprising:
1) a step of detecting the event input that is inputted by the operation signal and determining sound characteristic information and sound effects corresponding to the event input;
2) a step of obtaining a first sound source position coordinates information in which a location where the event occurred in the virtual space is taken as a sound source position;
3) a step of determining a propagation mode of a sound to be produced corresponding to the event input in the virtual space based on the sound characteristics information and the first sound source position coordinates information;
4) a step of determining a second sound source position coordinates information indicating a position of a sound source on the radar image based on the first sound source position coordinates information; and
5) a step of displaying a sound wave image indicating a propagation mode of the sound effect on the radar image based on the propagation mode of the sound and the second sound source position coordinates information.
   Moreover, another embodiment of the present invention further includes:
6) a step of arranging an enemy character in the virtual space and controlling an action and position of the enemy character, and displaying on the radar image a symbol indicating a relative positional relationship in the virtual space between the player character and the enemy character,
7) a step of obtaining position coordinates information of the enemy character in the virtual space,
8) a step of judging whether or not the enemy character is present in a reach range of a sound produced corresponding to the event input based on the position coordinates information of the enemy character, the sound characteristics information, and the first sound source position information, and
9) a step of changing a parameter relating to an action of the enemy character when a determination is made in the 8) process that the enemy character is present within the reach range of the sound.

### Advantageous Effect of the Invention

With the present invention, a game application system can be provided that is capable of displaying a propagation condition of a sound on a screen separate from a main screen, displaying a symbol of an opponent in an image of a sound propagation mode, and determining an overlap between a region of sound propagation and a position of an opponent, and moreover by setting an extent to which the opponent perceives the sound source based on the determination result and determining an action mode of the opponent based on the extent of the perception, appropriately giving the game-player an indicator of the extent to which the opponent perceived a sound emitted from an object operated by the game-player, thereby enabling the game-player to accurately operate an operation object.

### DESCRIPTION OF DRAWINGS

FIG. 1 is a block diagram of an electronic game device according to an embodiment of the present invention.
FIG. 2 is one scene of a radar image displayed on a monitor.
FIG. 3 is an enlargement of a display image.
FIG. 4 is a block diagram of data processing means.
FIG. 5 is a block diagram illustrating storage areas of a system memory.
FIG. 6 is a flow chart showing a display action on the radio image.

### DETAILED DESCRIPTION

In the following embodiment to be described, a game device having a data processing function (computer function) executes a game application program such that the game-player can operate the electronic game in which an outline of the game application story is that a ninja aims to infiltrate enemy facilities so as not to be discovered by the enemy.

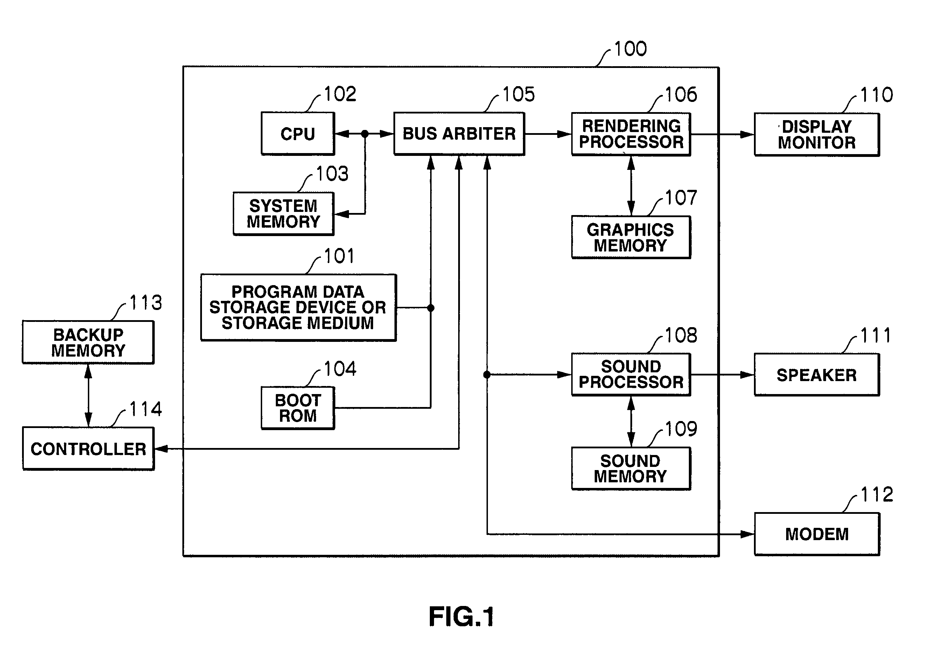

First, a configuration of the game device is described. FIG. 1 is a block diagram of an electronic game device according to the present invention. A game device 100 is provided with a program data storage device or storage medium (including for example an optical disk and optical disk drive, and a flash memory) 101 in which the game program and data (including images and music data) are stored, a CPU 102 for carrying out such tasks as execution of the game program, overall control of the system, and coordinate calculations for image display, a system memory 103 for storing programs and data necessary for the CPU 102 to carry out processing, a boot ROM 104 for storing programs and data necessary when the game device 100 is started up, and a bus arbiter 105 for controlling the flow of programs and data between the various blocks of the game device 100 and externally connected devices, with these components being connected respectively on a bus.

A rendering processor 106 is connected to the bus and video (movie) data read out from the program data storage device or storage medium 101 and images to be generated in response to operation by the game-player or progress of the game are displayed on a display monitor 110 by the rendering processor 106. Graphics data and the like necessary for the rendering processor 106 to perform image generation are stored in a graphics memory (frame buffer) 107.

A sound processor 108 is connected to the bus and music data read out from the program data storage device or storage medium 101 and sound effects and voices to be generated in response to operation by the game-player or progress of the game are output from a speaker 111 by the sound processor 108. Sound data and the like, necessary for the sound processor 108 to generate sound effects and voice, are stored in a sound memory 109.

A modem 112 is connected to the game device 100 and communication can be achieved via a telephone wire (not shown in drawings) with other game devices 100 and a network server. Moreover, connected to the game device 100 are a backup memory 113 (including a disk storage medium and storage device) in which information concerning the game at a midway process and program data inputted and outputted via the modem are recorded, and a controller 114 that inputs into the game device 100 information for controlling the game device 100 and externally connected devices in accordance with operation by an operator. An image computation process unit is constituted by the CPU 102 and the rendering processor 106. It should be noted that the units described here as structural portions of the game device may be divided off to other game devices or servers. An electronic amusement device, that is, an electronic amusement device according to the present invention, may be achieved by a game-player's game device terminal and a server.

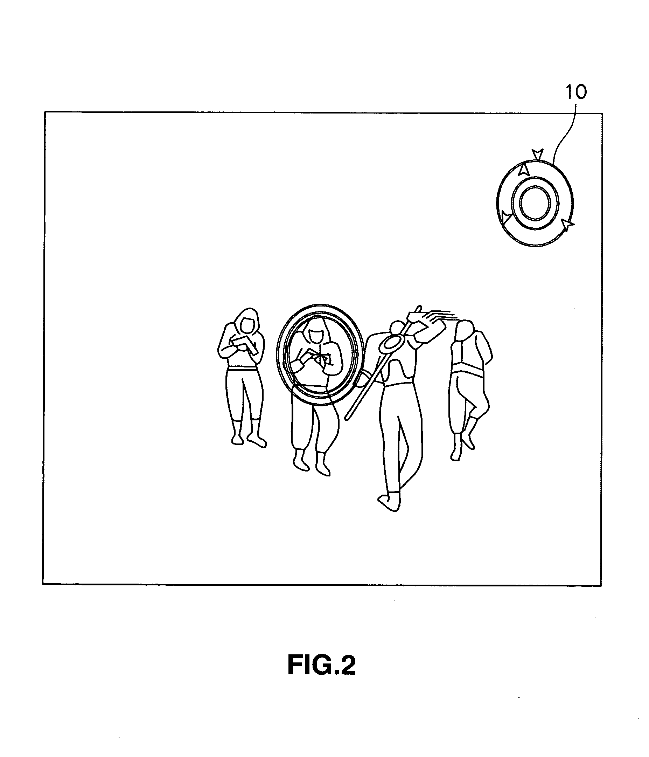

FIG. 2 is one scene of a video displayed on a monitor, and involves a story in which the player character operated by the game-player approaches enemy characters (opponents) striving not to be noticed and then defeating these. At the upper right of the drawing is displayed a sound radar image (screen) according to the present invention. The sound radar screen is distinguished from the center image of the game.

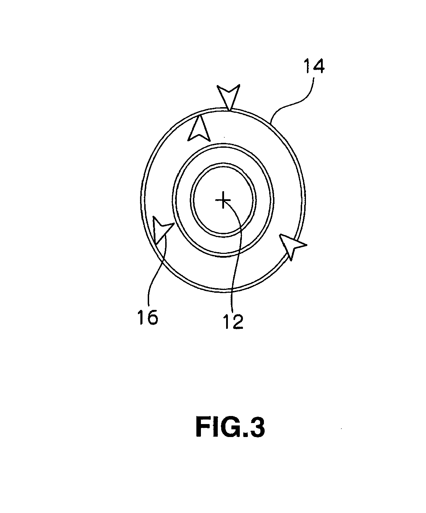

FIG. 3 shows an image of the sound radar screen. A center 12 indicates a sound source and shows a manner in which wave patterns 14 of sound from the sound source spread out as a circle is enlarged. The player character and the enemy characters are located in a virtual space (a space of three dimensional coordinates) defined by the game program. A triangle symbol 16 displayed on the sound radar image is indicated as an enemy character that is defined as an enemy in the story of the game for a player operated by a game-player. The player character moves and runs in predetermined directions due to operational input from the controller and is made to act so as to carry out predetermined attacks on the enemy characters. The enemy characters are displayed apart from the sound source according to the distance in the virtual space between the sound source and the enemy characters.

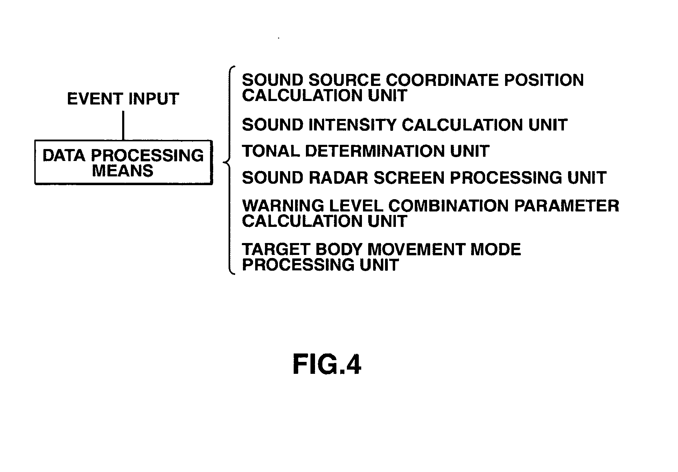

The CPU 102, which is one data processing device, achieves data processing means (sound radar image processing means) based on the game program and various types of data. As shown in FIG. 4, the data processing means achieves a sound source coordinate position calculation unit that calculates coordinate positions of a sound source by an event input, which is inputted to the game device 100 by operation of the controller by the game-player, a sound source intensity calculation unit that calculates sound source intensity, that is, the intensity of a sound, a tonal determination unit that determines tone, a sound radar screen processing unit that executes processing for generating the sound radar screen and displaying this on a monitor, a warning level combination parameter calculation unit for target bodies, and a movement mode processing unit for target bodies. Each unit is defined by commands and data of the game application program.

"Event input" refers to command data given to the game program via the controller such as making the player character run or jump. For example, when the player character jumps, a jumping sound is produced, and with the jump as the sound source, the jump position is stored as a sound source position in a predetermined region of a memory by the sound source coordinate position calculation unit. Also, phenomena other than the player character itself can become an event such as when the player character throws a rock for example and the rocks collides with the ground or a water surface, and the sound source coordinates in this case are the collision portion between the rock and the ground.

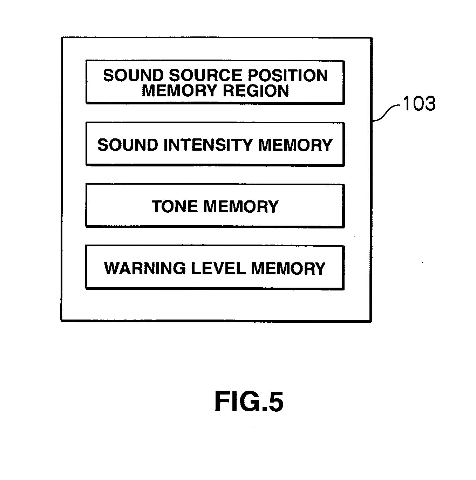

FIG. 5 is a block diagram showing regions of the system memory 103 in which position information of the sound source is set and stored in sound source position memory regions. Based on predetermined arithmetic expressions, the sound intensity calculation unit calculates the intensity of sound from event input information and other data (such as the player character's speed and characteristics of the surface where the player character is present, for example, a floor surface where sound is likely to be produced and a grass field surface where sound is unlikely to be produced). The sound intensity is stored in a sound intensity memory shown in FIG. 5.

The sound radar screen processing unit generates the sound radar screen shown in FIG. 3. A maximum reach range of a sound is defined by a maximum distance from a sound source based on the intensity of the sound. Data and parameters necessary for generating the sound radar screen are stored in the game program. The tonal determination unit determines the tone produced from the sound source, for example a sound of a person running, a sound of water splashing, or a metallic sound, and sets and stores this in a memory. Tone and sound intensity are examples of the characteristics of sound.

Warning level combination parameter calculation means are means for calculating a warning level given to enemy characters for a sound produced from a sound source. "Warning level" corresponds to a level at which a sound is perceived by an opponent character. The warning level is defined by parameters. As shown in FIG. 5, the parameter values are temporarily stored in the system memory.

In the warning levels that can be received by the enemy characters there are for example inattention (normal), cautiousness (attentive), vigilance (investigating), and assurance (attacking). Inattention is a state in which no particular reaction is necessary even when there is a sound, cautiousness is when it is necessary for the enemy character to take an action facing to the direction of a sound, vigilance is when it is necessary for the enemy character to advance toward the direction of a sound, and assurance is when it is necessary for the enemy character to fire a weapon toward the sound source. As described here, the movement modes of enemy characters are determined based on the combination parameter values of warning levels. The combination parameter values of warning levels and movement modes (motion data of the enemy characters) are defined in the game program in a table format for example.

The combination parameters of warning levels are defined for example by multiplying "a" parameter a relating to sound intensity and a parameter "b" relating to tone. The parameter values become higher for sound intensities that are higher, and the parameters become higher for sounds of tones that are easily recognized by the enemy (a sound of an explosion for example). The sound intensity should be determined using a position of the enemy character and the sound intensity is calculated by decreasing an initial intensity of a sound from a sound source according to the position of the sound source and the position of the enemy character.

By providing on the sound radar screen processing unit the movement modes of enemy characters corresponding to warning levels, the symbols of enemy characters move in decided movement modes on the sound radar screen. At this time, a color of the triangular symbols of the enemy characters may be varied in response to the warning levels. The warning level combination parameters become higher values for enemy characters that have a closer distance to the sound source.

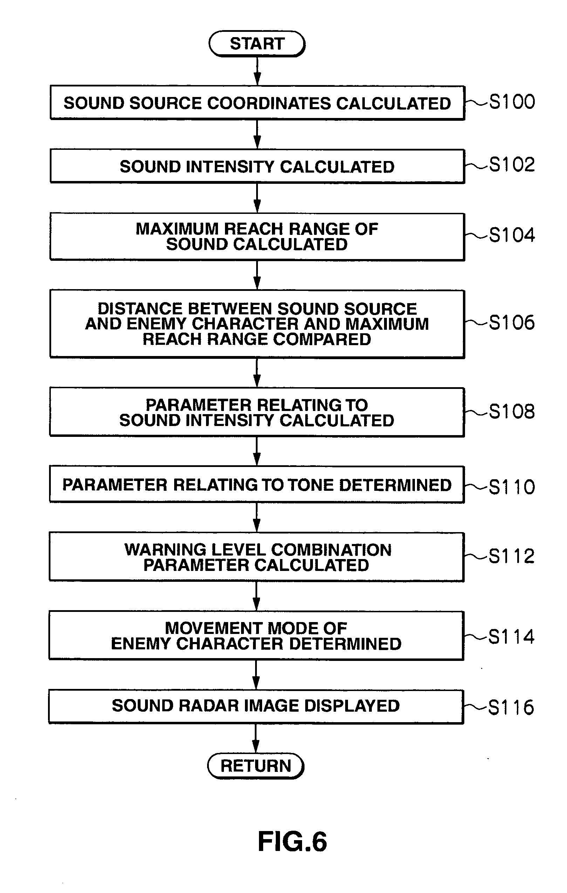

Next, a data processing action executed by the data processing device is described according to a flowchart shown in FIG. 6. First, when the game program starts, the CPU 102 calculates (S100) position coordinates of a sound source in the virtual space.

Following this, the intensity of the sound generated from the sound source is calculated (S102). Next, the maximum reach range of the sound is calculated (S104) from the intensity of the sound source. The maximum reach range of a sound is defined using a spherical surface. Following this, the position of the enemy character to the sound source is calculated and this is compared (S106) to a diameter of a maximum sphere of the maximum reach range. This comparison is repeated for all the characters that should be displayed on the sound radar.

For enemy characters inside the spherical surface, the initial intensity of the sound source is reduced based on a distance between each of the enemy characters and the sound source, and then a parameter value (parameter "a") relating to sound intensity is calculated (S108) based on the reduced value. At S110, a tone of the sound produced from the sound source is determined and a parameter value (parameter value "b") relating to tone is determined. Based on these parameters, by multiplying these parameters for example, the combination parameter values are calculated (S112). Based on the combination parameter values, the warning levels of the enemy characters inside the spherical surface are determined in multiple gradations from a table stored in the game program. Following this, the movement modes of the enemy characters are determined (S114) with respect to the gradations of warning levels.

The actions of the enemy characters are selected based on the movement modes. It should be noted that even when a condition in which sound is made perceivable to enemy characters is achieved as a result of calculation, in a case in which tone does not give warning to the enemy, the level of parameters indicating warning levels are set low.

At S116, data processing is executed to create a sound radar image and this is displayed on the screen. The maximum reach position of the wave patterns of sound are determined at S104. Images of the wave patterns of sound spreading out are set so that the diameter of the circle corresponding to the wave pattern is increased for each frame. Relative positions to the sound source coordinates of the target body are calculated and a symbol of each target body is displayed on the sound radar image. Symbols of target bodies outside the maximum reach range of a sound are displayed. Since sound does not reach these target bodies, the warning levels of the target bodies have low parameter values. On the other hand, the parameter values of target bodies closer to the sound source have higher numerical values.

The above-described embodiment provides for example the following advantages to a game-player compared with a conventional radar display. Since the game-player can judge whether or not a sound is perceived by opponents, the game-player can be more careful in the operation of the player character he is operating. The game-player can quickly detect whether or not a sound source is perceived by opponents and can swiftly take action to deal with this.

It should be noted that conveying this to the game-player can also be achieved in such ways as displaying the sound intensity (volume) as a numerical value on the sound radar image and changing the color of the wave patterns of sounds. Also, the sound intensity and propagation conditions of sound may be corrected according to the environment of the virtual space (atmospheric temperature and topography etc). Furthermore, the reduction of sound may be carried out by a predetermined value for each frame. In this case, a location where the sound intensity becomes zero is the maximum reach range of the sound. Furthermore, a display of tone can be added to the radar image. The color or shape (thick line, thin line etc) of the wave patterns (circles) of sounds may be varied.

It should be noted that sound, which is defined as a sound source, being caused by movement of the player character was a representative example. Naturally occurring sounds (such as animal movements or a cliff crumbling) may be defined as sound sources according to necessity. For example, if enemy characters run towards a sound produced by an animal moving, it is possible to create a condition in which it is difficult for the enemy characters to discover the player character.

In the present invention, "sound source information," which indicates a type of sound produced when an event of some kind has occurred, refers to information including the type of sound source that produced the sound, the type of sound source itself such as a sound produced by the player character, a warning sound or phrase emitted by an enemy, or a game object such as a bomb, a meaning which that sound indicates in the game such as warning sounds and ordinary phrases, as well as the type of action that produced the sound such as walking sounds, sword moving sounds, and sounds of weapons hitting walls and the like, and "propagation mode information" of sound refers to information that is not a realistic simulation of an actual sound but that can be set arbitrarily by the game maker such as intensity (volume), reach range, reach speed, and image data for displaying the propagation mode on the radar screen.

Also, the sound characteristics information is not set for all phenomena for which some sound should be produced in the game, but by producing sounds in response to phenomena in the game, sounds that are set so as to affect the actions of the enemy (for example, a sound of a throwing star being thrown is produced as a sound effect (a sound effect is actually emitted) so as to not be defined as "sound information," there is no display on the sound radar, and it can be set such that the enemy does not respond to the actual sound of the throwing star being thrown no matter what the conditions in the game.

On the other hand, when the throwing star hits a wall or the like, "sound characteristics information (the location of impact is set as the sound source position coordinates)" are set for the impact sound, and therefore sound waves from the location of impact are shown on the sound radar so as to spread out and enemies within the range of that reach can react and have their warning level increased or have their viewing field range changed toward where the sound occurred.

### Industrial Applicability

The present invention can be applied to an electronic amusement device.

## Claims

1. A data processing method in a game, wherein by a CPU executing a game program and through control of an action and a position of a player character in a virtual space based on an event input that is inputted based on an operation signal from operation means operated by a game-player, a scenario of the game is advanced, and an image of the game is displayed on display means, and a radar image, which indicates a relative positional relationship between the player character and objects arranged in a predetermined range thereabout in the virtual space, is displayed on the display means, the data processing method comprising:
1) a step of detecting the event input that is inputted by the operation signal and determining sound characteristic information and sound effects corresponding to the event input;
2) a step of obtaining a first sound source position coordinates information in which a location where the event occurred in the virtual space is taken as a sound source position;
3) a step of determining a propagation mode of a sound to be produced corresponding to the event input in the virtual space based on the sound characteristics information and the first sound source position coordinates information;
4) a step of determining a second sound source position coordinates information indicating a position of a sound source on the radar image based on the first sound source position coordinates information; and
5) a step of displaying a sound wave image indicating a propagation mode of the sound effect on the radar image based on the propagation mode of the sound and the second sound source position coordinates information.

2. The data processing method according to claim 1, further comprising:
6) a step of arranging an enemy character in the virtual space and controlling an action and position of the enemy character, and displaying on the radar image a symbol indicating a relative positional relationship in the virtual space between the player character and the enemy character,
7) a step of obtaining position coordinates information of the enemy character in the virtual space,
8) a step of judging whether or not the enemy character is present in a reach range of a sound produced corresponding to the event input based on the position coordinates information of the enemy character, the sound characteristics information, and the first sound source position information, and
9) a step of changing a parameter relating to an action of the enemy character when a determination is made in the 8) process that the enemy character is present within the reach range of the sound.

3. An electronic amusement device, comprising a memory in which a game program is stored; an operation terminal that is operated by a game-player; and a data processing device that executes data processing for electronic amusement based on operation data from the operation terminal and the game program, and executes a process in which a processing result is outputted to display means,
wherein the data processing device creates a sound radar image representing propagation of sound based on the program and operation data, and executes sound radar image processing means that displays the image on the display means,
and wherein the sound radar image processing means comprises: sound source coordinate position setting means that sets coordinate positions of a sound source in a virtual three dimensional space defined by the game program;
sound characteristics setting means that sets a parameter relating to a characteristic of a sound produced from a sound source;
sound propagation mode setting means that sets a propagation mode of a sound in the virtual space based on the sound source coordinate position and sound characteristics parameters;
sound propagation mode display processing means for displaying the sound propagation mode on the display means separate from a main screen,
target body symbol display processing means that obtains a position with respect to the sound source position of a target body defined as an opponent in the game program for the game-player and based on this positional relationship displays the target body symbol on the sound propagation mode display image, and
overlap determination means that determines an overlap between a position of the target body in the virtual space and the sound propagation range.

4. A device according to claim 1, wherein one of the sound characteristics is a parameter relating to sound intensity.

5. The device according to claim 3, wherein one of the sound characteristics is a parameter relating to sound tone.

6. The device according to any one of claims 3 to 5, wherein the sound radar image processing means comprises sound perception parameter calculation means that calculates a sound perception parameter corresponding to a level at which the target body perceives the sound source after the determination of overlapping is affirmed.

7. The device according to claim 6, wherein the sound perception level parameter calculation means calculates the sound perception level parameter based on a parameter relating to the sound characteristics.

8. The device according to claim 6 or 7, wherein the data processing device comprises means for determining a movement mode of the target body based on a sound perception level parameter value.

9. The device according to claim 6 or 7, wherein the sound data processing means comprises means for changing a display mode of a symbol of the target body based on the sound perception level parameter value.

10. The device according to any one of claims 3 to 9, wherein the sound radar image processing means is capable of displaying a symbol of the target body on the sound radar image outside a maximum range to which the sound can be propagated.

11. A data processing method in an electronic amusement device comprising a memory in which a game program is stored, an operation terminal that is operated by a game-player, and a data processing device that executes data processing for electronic amusement based on operation data from the operation terminal and the game program, and executes a process in which a processing result is outputted to display means,
wherein the data processing device creates a sound radar image representing propagation of sound based on the program and operation data, and executes a sound radar image processing step of displaying the image on the display means,
and wherein the sound radar image processing step comprises:
a sound source coordinate position setting step of setting coordinate positions of a sound source in a virtual three dimensional space defined by the game program;
a sound characteristics setting step of setting a parameter relating to a characteristic of a sound produced from a sound source;
a sound propagation mode setting step of setting a propagation mode of a sound in the virtual space based on the sound source coordinate position and sound characteristics parameters;
a sound propagation mode display processing step of displaying the sound propagation mode on the display means separate from a main screen;
a target body symbol display processing step of obtaining a position with respect to the sound source position of a target body defined as an opponent in the game program for the game-player and, based on the positional relationship, displaying the target body symbol on the sound propagation mode display image; and
an overlap determination step of determining an overlap between a position of the target body in the virtual space and the sound propagation range.

12. A program for executing on a computer the steps according to claim 11.

13. A storage medium on which the program according to claim 12 is recorded.

## Amended claims

### Amended claims under Art. 19.1 PCT

**1.** A data processing method in a game, wherein by a CPU executing a game program and through control of an action and a position of a player character in a virtual space based on an event input that is inputted based on an operation signal from operation means operated by a game-player, the game is advanced, and an image of the game is displayed on display means, and a radar image, which indicates a relative positional relationship between the player character and objects arranged in a predetermined range thereabout in the virtual space, is displayed on the display means, the data processing method comprising:
1) a step of detecting the event input that is inputted by the operation signal and determining sound characteristic information and sound effects corresponding to the event input;
2) a step of obtaining a first sound source position coordinates information in which a location where the event occurred in the virtual space is taken as a sound source position;
3) a step of determining a propagation mode, which includes at least a reach range, an intensity corresponding to a distance from the sound source position, and a reach speed, of a sound to be produced corresponding to the event input in the virtual space based on the sound characteristics information and the first sound source position coordinates information;
4) a step of determining a second sound source position coordinates information indicating a position of a sound source on the radar image based on the first sound source position coordinates information; and
5) a step of displaying a wave pattern of the sound on the radar image based on a determination result of the propagation mode of the sound and the second sound source position coordinates information such that the wave pattern spreads out from the sound source position at the virtual reach speed while enlarging.

**2.** The data processing method according to claim 1, further comprising the following processes:
6) a process of arranging an enemy character in the virtual space and controlling an action and position of the enemy character, and displaying on the radar image a symbol indicating a relative positional relationship in the virtual space between the player character and the enemy character,
7) a step of obtaining position coordinates information of the enemy character in the virtual space,
8) a step of judging whether or not the enemy character is present in the reach range of a sound produced corresponding to the event input based on the position coordinates information of the enemy character, the sound characteristics information, and the first sound source position information, and
9) a step of changing a parameter relating to an action of the enemy character when a determination is made in the 8) process that the enemy character is present within the reach range of the sound.

**3.** An electronic amusement device, comprising a memory in which a game program is stored; an operation terminal that is operated by a game-player, and a data processing device that executes data processing for electronic amusement based on operation data from the operation terminal and the game program, and executes a process in which a processing result is outputted to display means,
wherein the data processing device creates a sound radar image representing propagation of sound based on the program and operation data, and executes sound radar image processing means that displays the image on the display means,
and wherein the sound radar image processing means comprises sound source coordinate position setting means that sets coordinates positions of a sound source in a virtual three dimensional space defined by the game program;
sound characteristics setting means that sets a parameter relating to a characteristic of a sound produced from a sound source;
sound propagation mode setting means that sets a propagation mode, which includes at least a reach range, an intensity corresponding to a distance from the sound source position, and a reach speed, of a sound in the virtual space based on the sound source coordinate position and sound characteristics parameters;
sound propagation mode display processing means that displays a wave pattern of the sound on the radar image based on a determination result of the propagation mode of the sound such that the wave pattern spreads out from the sound source position at the virtual reach speed while enlarging;
target body symbol display processing means that obtains a position with respect to the sound source position of a target body defined as an opponent in the game program for the game-player and based on this positional relationship displays the target body symbol on the sound propagation mode display image; and
overlap determination means that determines an overlap between a position of the target body in the virtual space and the sound propagation range.

**4.** A device according to claim 1, wherein one of the sound characteristics is a parameter relating to sound intensity.

**5.** The device according to claim 3, wherein one of the sound characteristics is a parameter relating to sound tone.

**6.** The device according to any one of claims 3 to 5, wherein the sound radar image processing means comprises sound perception parameter calculation means that calculates a sound perception parameter corresponding to a level at which the target body perceives the sound source after the determination of overlapping is affirmed.

**7.** The device according to claim 6, wherein the sound perception level parameter calculation means calculates the sound perception level parameter based on a parameter relating to the sound characteristics.

**8.** The device according to claim 6 or 7, wherein the data processing device comprises means for determining a movement mode of the target body based on a sound perception level parameter value.

**9.** The device according to claim 6 or 7, wherein the sound data processing means comprises means for changing a display mode of a symbol of the target body based on the sound perception level parameter value.

**10.** The device according to any one of claims 3 to 9, wherein the sound radar image processing means is capable of displaying a symbol of the target body on the sound radar image outside a maximum range to which the sound can be propagated.

**11.** A data processing method in an electronic amusement device comprising a memory in which a game program is stored, an operation terminal that is operated by a game-player, and a data processing device that executes data processing for electronic amusement based on operation data from the operation terminal and the game program, and executes a process in which a processing result is outputted to display means, wherein the data processing device creates a sound radar image representing propagation of sound based on the program and operation data, and executes a sound radar image processing step of displaying the image on the display means,
and wherein the sound radar image processing step comprises: a sound source coordinate position setting step of setting coordinate positions of a sound source in a virtual three dimensional space defined by the game program;
a sound characteristics setting step of setting a parameter relating to a characteristic of a sound produced from a sound source;
a sound propagation mode setting step of setting a propagation mode, which includes at least a reach range, an intensity corresponding to a distance from the sound source position, and a reach speed, of a sound in the virtual space based on the sound source coordinate position and sound characteristics parameters;
a sound propagation mode display processing step of displaying a wave pattern of the sound on the radar image such that the wave pattern spreads out from the sound source position at the virtual reach speed while enlarging;
a target body symbol display processing step of obtaining a position with respect to the sound source position of a target body defined as an opponent in the game program for the game-player and, based on the positional relationship, displaying the target body symbol on the sound propagation mode display image; and
an overlap determination step of determining an overlap between a position of the target body in the virtual space and the sound propagation range.

**12.** A program for executing on a computer the steps according to claim 11.

**13.** A storage medium on which the program according to claim 12 is recorded. Translator notes:
